## Europäisches Patentamt
## European Patent Office
## Office européen des brevets

(19)

(11) Veröffentlichungsnummer: **0 024 025**
**B1**

(12) **EUROPÄISCHE PATENTSCHRIFT**

(45) Veröffentlichungstag der Patentschrift:
**27.04.83**

(51) Int. Cl.³: **B 22 D 13/06,** A 61 C 13/20

(21) Anmeldenummer: **80104584.0**

(22) Anmeldetag: **02.08.80**

(54) **Gussschleuder.**

(30) Priorität: **11.08.79 DE 2932681**

(43) Veröffentlichungstag der Anmeldung:
**18.02.81 Patentblatt 81/7**

(45) Bekanntmachung des Hinweises auf die Patenterteilung:
**27.04.83 Patentblatt 83/17**

(84) Benannte Vertragsstaaten:
**FR IT**

(56) Entgegenhaltungen:

**DE-A-2 020 910**
**DE-B-1 280 499**
**DE-B-2 115 042**
**FR-A-835 863**
**FR-A-1 037 630**
**FR-E-62 058**
**GB-A-10 963**
**US-A-1 805 168**
**US-A-1 976 654**
**US-A-3 648 762**

(73) Patentinhaber: **Fried. Krupp Gesellschaft mit beschränkter Haftung, Altendorfer Strasse 103, D-4300 Essen 1 (DE)**

(72) Erfinder: **Friedrich, Ronald; Monterkampweg 43, D-4132 Kamp-Lintfort (DE)**
Erfinder: **Hammecke, Werner, Schützenstrasse 1, D-4508 Bohmte (DE)**

ACTORUM AG

Gussschleuder

Die Erfindung betrifft eine Gussschleuder nach dem Oberbegriff des Anspruchs 1 oder 9 (DE-A-2 020 910). Gussschleudern der eingangs genannten Art arbeiten bei Drehfrequenzen von 350 bis 500 Hz (UPM). Vor Inbetriebnahme muss daher nach dem Einspannen der Muffel eine eventuell vorhandene Unwucht beseitigt werden. Die Beseitigung der Unwucht liegt einmal im Interesse einer grösseren Laufruhe ohne maschinenschädigende Schüttelbewegungen, zum anderen wird ein nachteiliger Einfluss auf die Qualität des herzustellenden Schleudergusses vermieden. Nach dem Stand der Technik werden Gewichtsunterschiede dadurch beseitigt, dass das Gegengewicht von Hand bis zum Ausgleich einer eventuell vorhandenen Unwucht verschoben wird.

Die Qualität des Schleudergusses hängt weiterhin von der Temperaturkonstanz und ggf. von der Güte des Vakuums in der Vakuumgusskammer ab, die geeignet isoliert und abgedichtet werden muss.

Es ist Aufgabe der vorliegenden Erfindung, eine Gussschleuder zu schaffen, mit der die obengenannten Voraussetzungen zur Herstellung einer qualitativ guten Gusslegierung erfüllbar sind, wobei es zusätzlich Aufgabe der Erfindung sein soll, die Gussschleuder auch bei der Benutzung von Gussmuffeln unterschiedlicher Grösse leicht und schnell bedienbar zu machen.

Die Aufgabe wird durch eine Gussschleuder mit fest angebrachtem Gegengewicht gelöst, bei der jede Muffel in einem ihr grössen- und gewichtsspezifisch zugeordneten, austauschbaren Muffelkäfig gehaltert wird. Der Vorteil dieser Gussschleuder besteht darin, dass auf die bisher erforderliche, mühsame und zeitraubende Einstell- und Justierarbeit am Gegengewicht verzichtet werden und statt dessen eine exaktere Auswuchtung vorgenommen werden kann. Das Gesamtgewicht von Muffelkäfig und eingelegter Muffel ist dabei so gross, dass bei Drehung des Schleuderarmes dieser sich mit dem Gegengewichtsarm im Gleichgewicht befindet. Die vor Inbetriebnahme der Gussschleuder anfallenden Arbeiten beschränken sich vorteilhafterweise auf das Einlegen einer Gussmuffel in den Muffelkäfig, der in die Gusskammer gelegt wird. Jedem Gussmuffeltyp ist dabei ein spezieller Muffelkäfigtyp bestimmter Grösse zugeordnet.

In einer Weiterbildung der Erfindung besitzt die Gusskammer zur Aufnahme der Muffelkäfige entsprechend angepasste Leerräume. Zur Zentrierung der Muffel in dem Muffelkäfig und damit zur weiteren Bedienungserleichterung sind Auflagen im Muffelkäfig vorgesehen. Die Zuordnung der Gussmuffel zu einem Muffelkäfigtyp wird dann eindeutig.

Die geforderte Temperaturkonstanz gewährleistet doppelwandige und/oder mit einer wärmeisolierenden Schicht versehene Muffelkäfige.

Zur Erleichterung bei der Herausnahme der heissen Muffelkäfige aus der Gussschleuder sind an der Muffelkäfigaussenseite Laschen vorgesehen, an denen der Muffelkäfig mitsamt der Gussmuffel mit Hilfe eines geeigneten Werkzeugs leicht aufnehmbar ist. Als Werkzeuge können im einfachsten Falle schon Haltehebel mit Isoliergriff und einer Zunge dienen, die in die Lasche geschoben werden kann.

Der weiteren Bedienungserleichterung ist es nach einer Weiterbildung der Erfindung förderlich, wenn die Gusskammer, insbesondere wenn es sich um eine Vakuumkammer handelt, eine mittels Hebelverschluss arretierbare Abdeckung besitzt. Vorteilhafterweise besitzt die Abdeckung an ihrer Auflagefläche Dichtungen und ist mit einer Sichtscheibe ausgestattet.

Die der Erfindung zugrundeliegende Aufgabe wird gleichermassen durch eine Gussschleuder nach Anspruch 9 gelöst. Diese Gussschleuder besitzt ebenfalls den Vorteil, dass mit ihr ohne langwieriges Justieren des Gegengewichtes gearbeitet werden kann. Bedienungsfehler werden auf einfache Art vermieden. Die Muffel wird nach Einlegen durch Drehen des Handrades festgeklemmt, wobei gleichermassen über die zweite Spindel das Gegengewicht ausgerichtet wird. Sofern Muffeln unterschiedlicher Grösse und damit unterschiedlichem Gewicht auch in der Länge differieren, d.h. die schwereren Muffeln auch entsprechend länger sind, erlaubt die erfindungsgemässe Gussschleuder die Verwendung jeder beliebigen Muffelgrösse, wobei man sich einmal auf eine bestimmte Muffelform festlegen muss. Mit dem Öffnen bzw. Schliessen der Muffelhalterung auf dem Führungsschlitten wird automatisch das Gegengewicht ausgerichtet.

Ein Ausführungsbeispiel der Erfindung ist in den Zeichnungen dargestellt. Es zeigen:

Fig. 1a einen Querschnitt durch den Schleuderarm einer Gussschleuder,

Fig. 1b die Draufsicht auf den Schleuderarm nach Fig. 1,

Fig. 2a, 2b einen Muffelkäfig im Querschnitt bzw. Längsschnitt, Fig. 2c einen Haltehebel zur Aufnahme des Muffelkäfigs nach Fig. 2a und 2b,

Fig. 3a einen Querschnitt durch einen andersgestalteten Schleuderarm einer Gussschleuder und

Fig. 3b die Draufsicht auf den Schleuderarm nach Fig. 3a.

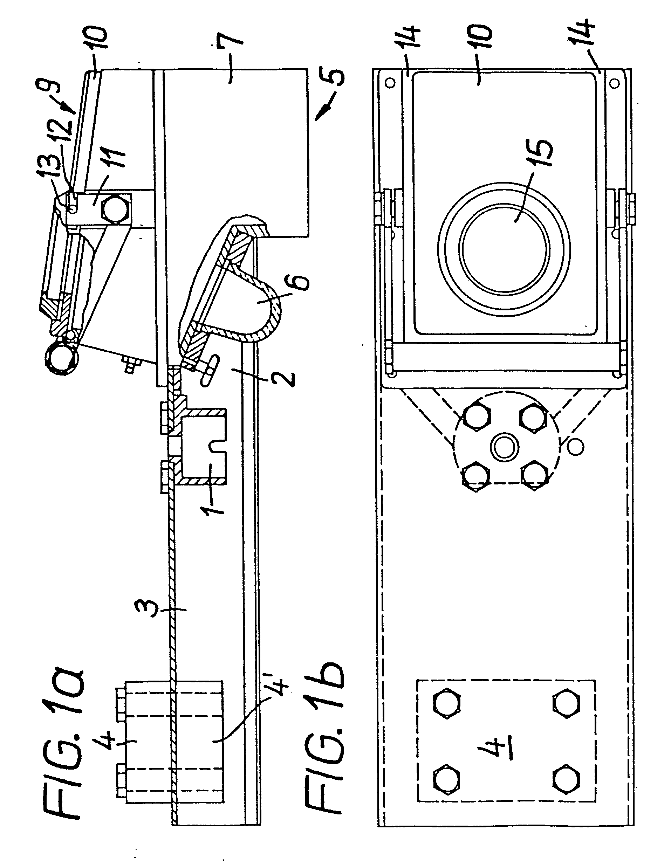

Die in Fig. 1a und 1b dargestellte Gussschleuder besteht im wesentlichen aus einem auf einer motorangetriebenen Welle 1 gelagerten Schleuderarm 2 und einem Gewichtsarm 3 mit Gegengewichten 4, 4'. An dem Schleuderarm 2 befindet sich die Gusskammer 5, die den Schmelztiegel 6 und einen Raum 7 zur Aufnahme des Muffelkäfigs 8 besitzt. Die Gusskammer 5 weist ferner an ihrer Oberseite 9 eine Öffnung auf, die mittels einer Abdeckung 10 verschliessbar ist. Diese wird zum Öffnen und Schliessen der Gusskammer 5 über einen Hebel 11 betätigt und ist mittels Schlitzen 12 an der Abdeckung und Stiften 13 an der Gusskammer 5 arretierbar. Insbesondere wenn die Gusskammer 5 als Vakuumgusskammer ausgelegt ist, befinden sich noch Dichtungen 14 an der Gusskammer. Zweckmässigerweise besitzt die Abdeckung 10 eine Sichtscheibe 15, die bei Bedarf getönt ist.

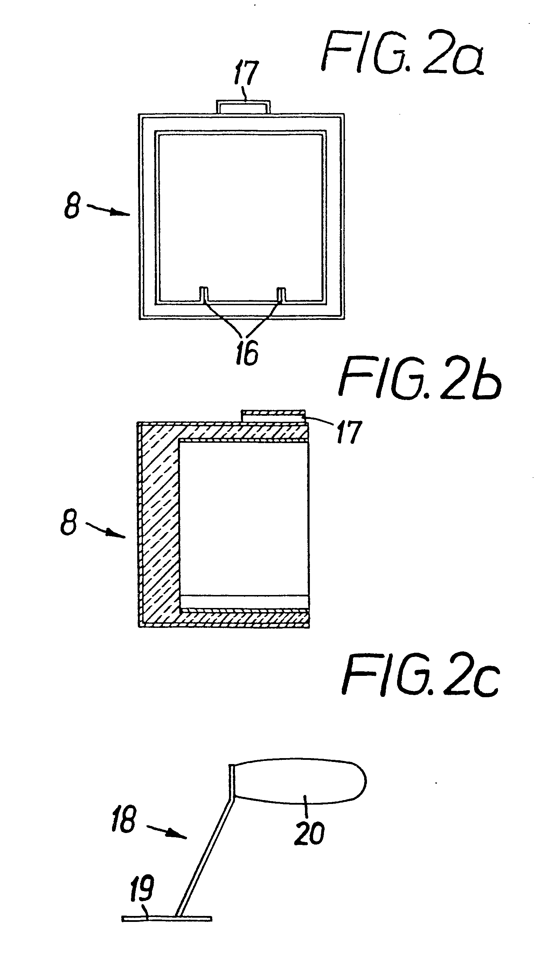

Der in Fig. 2a und 2b dargestellte Muffelkäfig 8 besitzt Würfelform und ist mit Auflagen 16 für die Muffeln, die beim Einlegen dadurch gleich zentriert werden, und einer Lasche 17 ausgestattet. In die Lasche 17 lässt sich die Zunge 19 des in Fig. 2c dargestellten Haltehebels 18 einschieben, so dass der Muffelkäfig 8 leicht transportierbar ist. Zweckmässigerweise besteht der Griff 20 des Haltehebels 18 aus Holz bzw. er ist wärmeisoliert.

Die Bedienung der in Fig. 1 und 2 skizzierten Vorrichtung ist einfach. Je nach verwendeter Muffel wird ein dazugehöriger, angepasster Muffelkäfig 8 gesucht, der in den Raum 7 eingelegt wird. Anschliessend wird die Gusskammer 5 mittels der Abdeckung 10 durch Betätigung des Hebels 11 verschlossen. Die nach dem Stand der Technik bekannte Herstellung eines Schleudergusses kann beginnen.

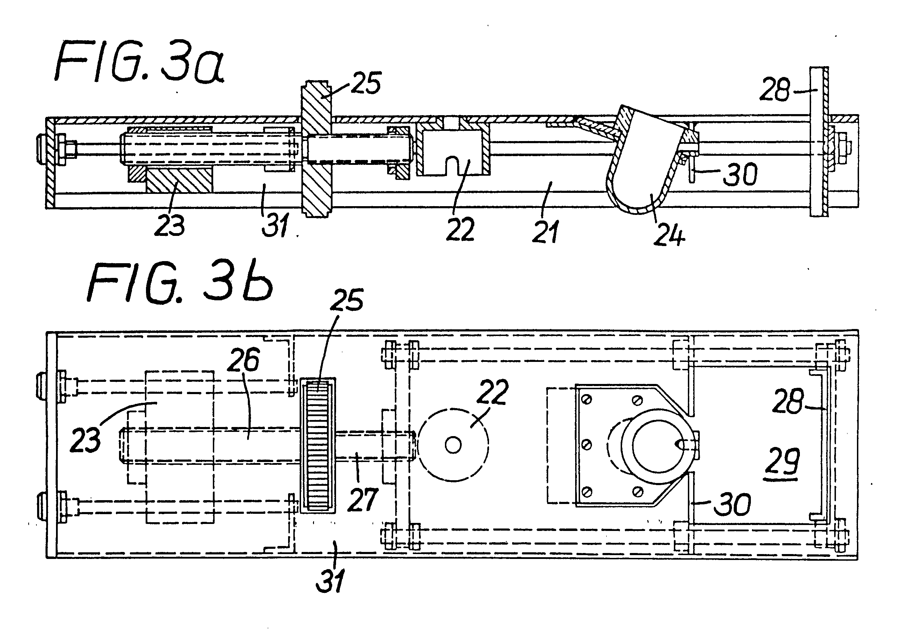

Alternativ zu der in Fig. 1a und 1b abgebildeten Gussschleuder kann aber auch die in Fig. 3a und 3b dargestellte Gussschleuder verwendet werden. Diese besteht im wesentlichen ebenfalls aus einem auf einer Welle 22 befestigten Schleuderarm 21, einem Gewichtsarm 31 mit Gegengewicht 23 sowie einem Schmelztiegel 24. Die Gusskammer ist nicht dargestellt, ist aber entsprechend Fig. 1 aufgebaut. Dagegen unterscheidet sich die Gussschleuder in der Vorrichtung zur Einstellung eines Rotationsgleichgewichtes. Dazu dient ein Handrad 25, dessen Drehung über zwei mit unterschiedlichem Gewinde versehene Spindeln 26, 27 eine gleichzeitige Verschiebung des Gegengewichtes 23 bzw. der Haltewand 28 des Führungsschlittens 29 bewirkt, in den eine Gussmuffel eingelegt werden kann.

Die Gussschleuder nach Fig. 3a und 3b ist ähnlich leicht zu bedienen. Die Gussmuffel wird in den Führungsschlitten 29 eingelegt, wonach das Handrad 28 so lange betätigt wird, bis sie zwischen der Wand 30 des Führungsschlittens 29 und der Haltewand 28 fest eingeklemmt ist. Gleichzeitig wird dabei über die Spindel 26 das Gegengewicht 23 in die dem Gewichtsausgleich entsprechende Position gefahren. Der Schleuderguss kann hergestellt werden.

## Patentansprüche

1. Gussschleuder, insbesondere für zahntechnische Zwecke, mit einem um eine vertikale Achse drehbaren, motorangetriebenen Schleuderarm (2) mit einer Gusskammer (5), die ggf. evakuierbar ist und in der sich ein Schmelztiegel (6) und eine in einem Muffeleinsatz gehalterte Gussmuffel befinden, und mit einem ebenfalls um diese vertikale Achse drehbar angeordneten Gewichtsarm (3) mit fest angebrachtem Gegengewicht (4, 4'), dadurch gekennzeichnet, dass jede Muffel in einem ihr grössen- und gewichtsspezifisch zugeordneten, austauschbaren Muffelkäfig (8) gehaltert wird.

2. Gussschleuder nach Anspruch 1, dadurch gekennzeichnet, dass die Gusskammer (5) zur Aufnahme der Muffelkäfige (8) entsprechend angepasste Räume (7) besitzt.

3. Gussschleuder nach Anspruch 1, gekennzeichnet durch Auflagen (16) zur Zentrierung der Muffel im Muffelkäfig (8).

4. Gussschleuder nach Anspruch 1, gekennzeichnet durch doppelwandige und/oder mit einer wärmeisolierenden Schicht versehene Muffelkäfige.

5. Gussschleuder nach Anspruch 1, dadurch gekennzeichnet, dass die Muffelkäfige an ihrer Aussenseite Laschen (17) besitzen.

6. Gussschleuder nach Ansprüchen 1 und 2, dadurch gekennzeichnet, dass die Gusskammer (5) eine mittels Hebelverschluss arretierbare Abdeckung (10) besitzt.

7. Gussschleuder nach Ansprüchen 1, 2 und 6, dadurch gekennzeichnet, dass die Gusskammer an der Auflagefläche für die Abdeckung mit Dichtungen (14) versehen ist.

8. Gussschleuder nach Ansprüchen 6 und 7, dadurch gekennzeichnet, dass die Abdeckung eine Sichtscheibe (15) enthält.

9. Gussschleuder, insbesondere für zahntechnische Zwecke, mit einem um eine vertikale Achse drehbaren, motorangetriebenen Schleuderarm (21) mit einer Gusskammer, die ggf. evakuierbar ist und in der sich ein Schmelztiegel (24) und eine in einem Muffeleinsatz gehalterte Gussmuffel befinden, und mit einem ebenfalls um diese vertikale Achse drehbar angeordneten Gewichtsarm (31) mit einem Gegengewicht (23), das ebenso wie die eingelegte Gussmuffel horizontal über die Schleuderarm- bzw. Gewichtsarmachse verschiebbar ist, dadurch gekennzeichnet, dass das Gegengewicht (23) und die eingelegte Gussmuffel über ein als einzige Einstellvorrichtung (25) wirkendes Handrad verschiebbar sind, das über zwei Spindeln (26, 27) mit unterschiedlichem, gegenläufigem Gewinde mit dem die Gussmuffel aufnehmenden Führungsschlitten (29) bzw. dem Gegengewicht (23) gekoppelt ist.

## Revendications

1. Centrifugeuse de coulée, notamment pour la fabrication d'articles pour la chirurgie dentaire, comprenant un bras de centrifugation (2) monté de manière à pouvoir tourner autour d'un axe vertical et portant une chambre de coulée (5) dans laquelle, le cas échéant on peut faire le vide, et dans laquelle se trouvent un creuset de fusion (6) et un moufle de coulée maintenu dans un support de moufle, et un bras porteur de poids (3) qui est également monté de manière à pouvoir tourner autour de l'axe vertical et sur lequel le contrepoids (4, 4') est monté à poste fixe, caractérisé en ce que chaque moufle est maintenu dans une cage à moufle (8) amovible dont les dimensions et le poids lui correspondent.

2. Centrifugeuse de coulée selon la revendication 1, caracterisée en ce que la chambre de coulée (5) comporte, pour le logement des cages à moufles (8), des cavités ou parties vides (7) qui leur sont adaptées.

3. Centrifugeuse de coulée selon la revendication 1, caracterisée en ce que la cage à moufle (8) comprend des appuis (16) pour le centrage du moufle.

4. Centrifugeuse de coulée selon la revendication 1, caracterisée en ce que les cages à moufles comportent des parois doubles et/ou une couche d'isolation thermique.

5. Centrifugeuse de coulée selon la revendication 1, caracterisée en ce que les cages à moufles comportent sur leur surface extérieure des anses (17) ou des dispositifs analogues.

6. Centrifugeuse de coulée selon les revendications 1 et 2, caractérisée en ce que la chambre de coulée (5) a un couvercle (10) qui peut être bloqué par un dispositif de fermeture à levier.

7. Centrifugeuse de coulée selon les revendications 1, 2 et 6, caracterisée en ce que la chambre de coulée est munie de joints d'étanchéité (14) au niveau des surfaces d'appui de son couvercle.

8. Centrifugeuse de coulée selon les revendications 6 et 7, caracterisée en ce que le couvercle comporte un regard (15).

9. Centrifugeuse de coulée, notamment pour la fabrication d'articles pour la chirurgie dentaire, comprenant un bras de centrifugation (21) monté de manière à pouvoir tourner, sous l'action d'un moteur, autour d'un axe vertical et portant une chambre de coulée dans laquelle, le cas échéant, on peut faire le vide et dant laquelle se trouvent un creuset de fusion (24) et un moufle de coulée maintenu dans un support de moufle, et un bras porteur de poids (31) qui est monté également de manière à pouvoir tourner autour de l'axe vertical et sur lequel est monté un contrepoids (23) qui, comme le moufle de coulée et son support, peut se déplacer dans le sens horizontal sur le bras de centrifugation et au-dessus de l'axe du bras porteur de poids, caractérisée en ce que le contrepoids (23) et le moufle de coulée et son support peuvent se déplacer sous l'action d'un volant à main qui constitue un dispositif de réglage unique (25) et est accouplé, par l'intermédiaire de deux broches (26, 27) présentant des filetages différents de sens opposé, avec le chariot de guidage (29) qui porte le moufle de coulée et avec le contrepoids (23).

**Claims**

1. Centrifugal caster, particularly for dental purposes, including a motor-driven centrifuge arm (2) which is rotatable about a vertical axis, with a casting chamber (5) which may possibly be evacuatable and in which there are disposed a melting crucible (6) and with a casting muffle mounted in a muffle insert, and a weight arm (3) which is likewise rotatable about said vertical axis and is provided with a firmly attached counterweight (4, 4'), characterized in that each muffle is held in an exchangeable muffle cage (8) associated with it according to its size and weight.

2. Centrifugal caster according to claim 1, characterized in that the casting chamber (5) is provided with areas (7) which are suitable adapted to accommodate the muffle cages (8).

3. Centrifugal caster according to claim 1, characterized by supports (16) for centering the muffle in the muffle cage (8).

4. Centrifugal caster according to claim 1, characterized by double-walled muffle cages and/or muffle cages which are provided with a heat-insulating coating.

5. Centrifugal caster according to claim 1, characterized in that the outsides of the muffle cages are provided with projections (17).

6. Centrifugal caster according to claims 1 and 2, characterized in that the casting chamber (5) is provided with a cover (10) which can be arrested by means of a lever lock.

7. Centrifugal caster according to claims 1, 2 and 6, characterized in that the casting chamber is provided with seals (14) at the contact face for the cover.

8. Centrifugal caster according to claims 6 and 7, characterized in that the cover includes a viewing pane (15).

9. Centrifugal caster, particularly for dental purposes, including a motor-driven centrifuge arm (21) which is rotatable about a vertical axis, with a casting chamber which may possibly be evacuatable and in which there are disposed a melting crucible (24) and with a casting muffle mounted in a muffle insert and a weight arm (31) which is likewise rotatable about said vertical axis and is provided with a counterweight (23) which, like the inserted casting muffle, is horizontally movable over the axis of the centrifuge arm or the axis of the weight arm, characterized in that the counterweight (23) and the inserted casting muffle are displaceable by means of a handwheel as single setting device (25) which is coupled with the guide carriage (29) accomodating the casting muffle or with the counterweight (23) via two spindles (26, 27) which have different, oppositely oriented threads.

FIG. 1a

FIG. 1b

*FIG.2a*

17

8 →

16

*FIG.2b*

17

8 →

*FIG.2c*

18 →

19

20

FIG. 3a

FIG. 3b

0 024 025